# EUROPEAN PATENT APPLICATION

(11) **EP 4 206 998 A1**
(43) Date of publication of application: **05.07.2023**
(21) Application number: 21218258.8
(22) Date of filing: 30.12.2021
(51) Int. Cl.: G06N 3/08, G06N 3/04, G06N 5/00, G06N 20/10, G06N 20/20

(54) **COMPUTERIZED METHOD FOR DETERMINING THE RELIABILITY OF A PREDICTION OUTPUT OF A PREDICTION MODEL**

(71) Applicant: Ummon HealthTech, 71000 Macon (FR)
(72) Inventor: Vinçon, Nathan, 91440 Bures sur Yvette (FR); Morel, Louis-Oscar, 21000 Dijon (FR)
(74) Representative: Fidal Innovation

(57) **Abstract**

A computerized method for determining the reliability of a prediction output of at least one machine-learned or deep-learned first prediction model,
the method comprising:
- a prediction model computerized module implements
- the at least one first prediction model to obtain a prediction output according to the first prediction model, and
- at least one other prediction model to obtain a prediction output according to this other prediction model,

- a similarity computerized module implements a similarity scoring method to determine a similarity score between :
the prediction output of the at least one first prediction model and
the prediction output of the at least one other prediction model,

- a reliability computerized module implement an reliability model which determines the reliability of the prediction output of the at least one first prediction model based on the determined similarity score.

## Description

### FIELD OF THE INVENTION

The present invention relates to the field of the prediction algorithms or models implemented by computerized modules, and in particular in the field of machine learned or deep-learned prediction models.

The present invention finds a particular application in the field of medicine but it is not limited of.

### TECHNOLOGICAL BACKGROUND

Machine learned or deep learned network or models are powerful black boxes that have recently achieved impressive performance on a wide spectrum of tasks.

Those black boxes have been more and more used in the industry in various applications thanks to their impressive results in prediction or prediction. However, there is a need to understand the meaning of those results and/or the process of the models to obtain those results. Thus, the operational acceptability of such applications is largely conditioned by the capacity of engineers and decision-makers to understand the meaning and properties of the results produced by those models.

Moreover, beyond questions of interpretability and explainability of the models, the uncertainty of the results of those models is also a crucial point. Indeed, machine learned or deep learned networks or models are poor at quantifying predictive uncertainty and tend to be overconfident in their predictions.

Therefore, besides achieving high accuracy, it is also crucial to obtain reliable uncertainty estimates, which can help deciding whether the model predictions can be trusted even if not perfectly understood. Quantifying predictive or prediction uncertainty in machine learned or deep learned network or models is a challenging and yet unsolved problem.

The need is therefore to evaluate the reliability of the results of the machine learned or deep learned models.

### SUMMARY OF THE INVENTION

Thus, the invention relates to a computerized method for determining the reliability of a prediction output of at least one machine-learned or deep-learned first prediction model, the method comprising:
- a prediction model computerized module implements
   - the at least one first prediction model to obtain a prediction output according to the first prediction model, and
   - at least one other prediction model to obtain a prediction output according to this other prediction model,
- a similarity computerized module implements a similarity scoring method to determine a similarity score between :
   the prediction output of the at least one first prediction model and
   the prediction output of the at least one other prediction model,
- a reliability computerized module implements a reliability model which determines the reliability of the prediction output of the at least one first prediction model based on the determined similarity score.

Thanks to the method, it is possible to determine the reliability of the output of a machine learned model even if this machine learned model cannot be explained and/or interpreted.

Thanks to the determination of the reliability, it is easier for a decision-maker to decide whether to use the output of the machine learned model.

Indeed, as an example, the output of the machine learned model can be the input of another computerized module. Knowing that flawed or nonsense input data produces nonsense output even if the computerized module in which the input data are put in is well conceived, the method provides an improvement of any system implementing computerized modules.

Moreover, during the training phase of the machine learned model, the method allows to alert of overfitting (settling on a bad, overly complex theory conceived to fit all the past training data is known as overfitting).

Preferably, the output of the at least one first prediction model and the at least one other prediction model is a prediction vector of one of the following type:
- a simplex probability vector (multiclass),
- a one dimension probability vector, or
- a N-dimension probability vector.

Preferably, the similarity scoring method is one of the followings methods:
- cosine distance method,
- Kullback Leibler divergence method,
- equivalence of highest probability class method,
- dispersion of inferred Dirichlet method, or
- information radius method.

The invention also relates to a method determining the reliability of prediction outputs determined by:
- the at least one first prediction model and
- the at least one other prediction model, wherein the at least one other prediction model is a machine-learned or deep-learned individual prediction model,
the method comprising
- the reliability computerized module implements the reliability model which determines the reliability of the prediction outputs based on the determined similarity score.

When all the prediction models are conceived to determine similar prediction or similar prediction - basically when all the prediction models are conceived to answer the same question based on the same input dataset - the method allows determining the reliability of the outputs even if the machine learned models cannot be explained and/or interpreted and then to use (or not) the outputs or to make (or not) decision based on them according to the reliability determined.

Preferably, the at least one first prediction model and the at least one other prediction model have a different architecture. The architecture of a model refers to the fundamental mathematic structures and/or software structures of the model. Each model architecture has specific advantages and disadvantages/biases/limitations relaying on the advantages and limitations of mathematical and/or software structures.

Thus, each model having a different architecture, the obtained outputs do not suffer from the same limitations/biases.

Preferably, an aggregation computerized module aggregates the prediction outputs into an aggregated prediction output.

Thus, there is a unique output that reliability or trust is to be determined. Moreover, if the at least one first prediction model and the at least one other prediction model have a different model architecture, the aggregated output mixes all the advantages and limitations of the predictions outputs obtained by implemented the plurality of different models.

Preferably, the aggregation computerized module aggregates the prediction outputs into an aggregated prediction output using a truth discovery method such as:
- majority voting,
- weighted voting,
- bayesian method, or
- information retrieval method.

Preferably, the at least first prediction model and the at least one other prediction model are implemented on input datas from measurements or acquisitions made by one or more measurement or acquisition system

Preferably, the reliability model is a machine learned or deep-learned prediction model such as:
- multinomial logistic regression model,
- multinomial linear regressor model, or
- naive bayes model.

The invention also relates to a computerized training method of the reliability model, wherein the reliability model is a machine learned or deep-learned prediction model,
the method comprising: comprising:
i - a prediction computerized module implements a plurality of prediction model on a training dataset to obtain prediction outputs,
ii - a similarity computerized module implements a similarity scoring method to determine a similarity score between the prediction outputs obtained,
iii - repetition of step i and ii, with a different training dataset at each repetition, to obtain a reliability model training dataset comprising the similarity scores determined,
each similarity score being labeled to be reliable or not,
iv - a calibration computerized module calibrates the reliability model, at the population level and/or at the single image level, with the reliability model training dataset, according to a supervised training.

Preferably, all the training datasets of step i are different from any dataset used to train the first prediction model of and, if applicable, different from any dataset used to train any of the plurality of prediction models.

Preferably, the different training dataset of step iii is obtained by data destruction on the training dataset of step i such as noise, blur, and/or uncontrast.

Preferably, the training method further comprises a bootstrap computerized module which implements a bootstrap and/or regularization method on the reliability model.

The invention also relates to computerized method for controlling a system implementing the method according to the invention.

The invention also relates to a computerized system for determining the reliability of a prediction output of at least one machine-learned or deep-learned first prediction model comprising:
- a prediction computerized module adapted to implement
- the at least one first prediction model to obtain a prediction output according to the first prediction model, and
- at least one other prediction model to obtain a prediction output according to this other prediction model,
- a similarity computerized module adapted to implement a similarity scoring method to determine a similarity score between :
   the prediction output of the at least one first prediction model and
   the prediction output of the at least one other prediction model,
- a reliability computerized module adapted to implement a reliability model which determines the reliability of the prediction output of the at least one first prediction model based on the determined similarity score.

The invention also relates to a computer program for determining the reliability of a prediction output of at least one machine-learned or deep-learned first prediction model, wherein the computer program is adapted, when run on a processor, to cause the processor to implement any method according to the invention.

### BRIEF DESCRIPTION OF THE DRAWINGS

Embodiments of the invention will be described below, in relation to the following drawings :
Fig. 1 shows a schema of the general architecture of the computerized method.
Fig. 2 shows a schema of the training method

On the drawings, the same reference signs show the same or similar objects.

### DETAILED DESCRIPTION

### General overview

### Machine learning

Machine learning (ML) is the study of computer algorithms that can improve automatically through experience and by the use of data. It is seen as a part of artificial intelligence. Machine learning algorithms build a model based on sample data, known as training data or training dataset, in order to make predictions or decisions or classification without being explicitly programmed to do so. Machine learning algorithms are used in a wide variety of applications, such as in medicine, email filtering, speech recognition, and computer vision, where it is difficult or unfeasible to develop conventional algorithms to perform the needed tasks.

The term "prediction" refers to the output of an algorithm after it has been trained on a historical dataset and applied to new data when forecasting the likelihood of a particular outcome. In some cases, it really does mean that you are predicting a future outcome; other times, though, the "prediction" has to do with a categorization of data (not a future data), where the term "classification" can also be used. In other words, the term "prediction" has to be understood in its broader meaning in the machine learning field. As said before, it can refer to classification output, categorization output or any output of a machine learning model.

Machine learning approaches are traditionally divided into four broad categories, depending on the nature of the "signal" or "feedback" available to the learning system:
- Supervised learning: the computer is presented with example inputs and their desired outputs, given by a "teacher", and the goal is to learn a general rule that maps inputs to outputs.
- Unsupervised learning: no labels are given to the learning algorithm, leaving it on its own to find structure in its input. Unsupervised learning can be a goal in itself (discovering hidden patterns in data) or a means towards an end (feature learning).
- Reinforcement learning: a computer program interacts with a dynamic environment in which it must perform a certain goal (such as driving a vehicle or playing a game against an opponent). As it navigates its problem space, the program is provided feedback that's analogous to rewards, which it tries to maximize.
- Semi-supervised learning: semi-supervised learning falls between unsupervised learning (without any labeled training data) and supervised learning (with completely labeled training data). Some of the training examples are missing training labels, yet many machine-learning researchers have found that unlabeled data, when used in conjunction with a small amount of labeled data, can produce a considerable improvement in learning accuracy. In weakly supervised learning, the training labels are noisy, limited, or imprecise; however, these labels are often cheaper to obtain, resulting in larger effective training sets.]

Supervised learning algorithms build a mathematical model of a set of data that contains both the inputs and the desired outputs. The data is known as training data, and consists of a set of training examples. Each training example has one or more inputs and the desired output, also known as a supervisory signal. In the mathematical model, each training example is represented by an array or vector, sometimes called a feature vector, and the training data is represented by a matrix. Through iterative optimization of an objective function, supervised learning algorithms learn a function that can be used to predict the output associated with new inputs. An optimal function will allow the algorithm to correctly determine the output for inputs that were not a part of the training data. An algorithm that improves the accuracy of its outputs or predictions or prediction over time is said to have learned to perform that task.

Types of supervised learning algorithms include active learning, prediction and regression. Prediction algorithms are used when the outputs are restricted to a limited set of values, and regression algorithms are used when the outputs may have any numerical value within a range. As an example, for a prediction algorithm that filters emails, the input would be an incoming email, and the output would be the name of the folder in which to file the email.

Similarity learning is an area of supervised machine learning closely related to regression and prediction, but the goal is to learn from examples using a similarity function that measures how similar or related two objects are. It has applications in ranking, recommendation systems, visual identity tracking, face verification, and speaker verification.

### Models of machine learning - examples

Performing machine learning involves creating a model, which is trained on some training data and then can process additional data to make predictions or predictions.

Various types of models have been used and researched for machine learning systems or deep learned systems. Hereafter, we list a list examples of these various type of models.

### Artificial neural networks model

Artificial neural networks (ANNs), or connectionist systems, are computing systems vaguely inspired by the biological neural networks that constitute animal brains. Such systems "learn" to perform tasks by considering examples, generally without being programmed with any task-specific rules.

An ANN is a model based on a collection of connected units or nodes called "artificial neurons", which loosely model the neurons in a biological brain. Each connection, like the synapses in a biological brain, can transmit information, a "signal", from one artificial neuron to another. An artificial neuron that receives a signal can process it and then signal additional artificial neurons connected to it. In common ANN implementation, the signal at a connection between artificial neurons is a real number, and the output of each artificial neuron is computed by some non-linear function of the sum of its inputs. The connections between artificial neurons are called "edges".

Artificial neurons and edges typically have a weight that adjusts as learning proceeds. The weight increases or decreases the strength of the signal at a connection. Artificial neurons may have a threshold such that the signal is only sent if the aggregate signal crosses that threshold. Typically, artificial neurons are aggregated into layers. Different layers may perform different kinds of transformations on their inputs. Signals travel from the first layer (the input layer) to the last layer (the output layer), possibly after traversing the layers multiple times.

A particular ANN model is a deep learning model. It consists of multiple hidden layers in an artificial neural network. This approach tries to model the way the human brain processes light and sound into vision and hearing. Learning can be supervised, semi-supervised or unsupervised.

Deep-learning architectures such as deep neural networks, deep belief networks, deep reinforcement learning, recurrent neural networks and convolutional neural networks have been applied to fields including computer vision, speech recognition, natural language processing, machine translation, bioinformatics, drug design, medical image analysis, material inspection and board game programs, where they have produced results comparable to and in some cases surpassing human expert performance.

### Decision tree model

Decision tree learning uses a decision tree as a predictive model to go from observations about an item (represented in the branches) to conclusions about the item's target value (represented in the leaves). It is one of the predictive modeling approaches used in statistics, data mining, and machine learning. Tree models where the target variable can take a discrete set of values are called prediction trees; in these tree structures, leaves represent class labels and branches represent conjunctions of features that lead to those class labels. Decision trees where the target variable can take continuous values (typically real numbers) are called regression trees. In decision analysis, a decision tree can be used to visually and explicitly represent decisions and decision making. In data mining, a decision tree describes data, but the resulting prediction tree can be an input for decision making.

### Support-vector machines model

Support-vector machines (SVMs), also known as support-vector networks, are a set of related supervised learning methods used for prediction and regression. Given a set of training examples, each marked as belonging to one of two categories, an SVM training algorithm builds a model that predicts whether a new example falls into one category or the other. An SVM training algorithm is a non-probabilistic, binary, linear classifier, although methods such as Platt scaling exist to use SVM in a probabilistic prediction setting. In addition to performing linear prediction, SVMs can efficiently perform a non-linear prediction using what is called the kernel trick, implicitly mapping their inputs into high-dimensional feature spaces.

### Regression analysis model

Regression analysis encompasses a large variety of statistical methods to estimate the relationship between input variables and their associated features. Its most common form is linear regression, where a single line is drawn to best fit the given data according to a mathematical criterion such as ordinary least squares. The latter is often extended by regularization (mathematics) methods to mitigate overfitting and bias, as in ridge regression. When dealing with non-linear problems, go-to models include polynomial regression (for example, used for trendline fitting in Microsoft Excel), logistic regression (often used in statistical prediction) or even kernel regression, which introduces non-linearity by taking advantage of the kernel trick to implicitly map input variables to higher-dimensional space.

### Bayesian network model

A Bayesian network, belief network, or directed acyclic graphical model is a probabilistic graphical model that represents a set of random variables and their conditional independence with a directed acyclic graph (DAG). For example, a Bayesian network could represent the probabilistic relationships between diseases and symptoms. Given symptoms, the network can be used to compute the probabilities of the presence of various diseases. Efficient algorithms exist that perform inference and learning. Bayesian networks that model sequences of variables, like speech signals or protein sequences, are called dynamic Bayesian networks. Generalizations of Bayesian networks that can represent and solve decision problems under uncertainty are called influence diagrams.

In statistics, naive Bayes classifiers are a family of simple "probabilistic classifiers" based on applying Bayes' theorem with strong (naive) independence assumptions between the features. They are among the simplest Bayesian network models, but coupled with kernel density estimation, they can achieve higher accuracy levels.

Multinomial logistic regression is used to predict categorical placement in or the probability of category membership on a dependent variable based on multiple independent variables. The independent variables can be either dichotomous (i.e., binary) or continuous (i.e., interval or ratio in scale). Multinomial logistic regression is a simple extension of binary logistic regression that allows for more than two categories of the dependent or outcome variable. Like binary logistic regression, multinomial logistic regression uses maximum likelihood estimation to evaluate the probability of categorical membership.

Multiple linear regression (MLR), also known simply as multiple regression, is a statistical technique that uses several explanatory variables to predict the outcome of a response variable. The goal of multiple linear regression is to model the linear relationship between the explanatory (independent) variables and response (dependent) variables. In essence, multiple regression is the extension of ordinary least-squares (OLS) regression because it involves more than one explanatory variable.

### Other models exist but those are the principal ones.

### Training of the models

Usually, machine learning models require a lot of data in order for them to perform well. Usually, when training a machine learning model, one needs to collect a large, representative sample of data from a training set. Data from the training set can be as varied as a corpus of text, a collection of images, and data collected from individual users of a service.

The training of a model is crucial for the performance of the model and in fine the reliability of the results of the model.

Overfitting is one of the biases to watch out for when training a machine learning model. Trained models derived from biased data can result in skewed or undesired predictions. Algorithmic bias is a potential result from data not fully prepared for training.

Overfitting is "the production of an analysis that corresponds too closely or exactly to a particular set of data, and may therefore fail to fit additional data or predict future observations reliably". An overfitted model is a statistical model that contains more parameters than can be justified by the data. The essence of overfitting is to have unknowingly extracted some of the residual variation (i.e., the noise) as if that variation represented underlying model structure.

The possibility of over-fitting exists because the criterion used for selecting the model is not the same as the criterion used to judge the suitability of a model. For example, a model might be selected by maximizing its performance on some set of training data, and yet its suitability might be determined by its ability to perform well on unseen data; then over-fitting occurs when a model begins to "memorize" training data rather than "learning" to generalize from a trend.

In the field of medicine, a concrete example would be in the case of histology. The data are image data of a biological sample digitized on a scanner X. One wishes to quantify a given marker whose coloring was carried out by an automaton Y. Once the training is carried out, although the machine learned model has been trained with the scanner X and the automaton Y, it is possible that the dye has been changed and the amount of this dye spread on the slide would be different from the training phase. However, these differences can lead to poor performance for the model if the model is overfitting the training datas.

### Understanding of the models

Beyond the biases that can be introduced during the training phase, the machine learning models can be difficult to understand. This understanding can be related to the "reasoning" of the models (how does the model determine its result?) but also to the reason why the model determines such a result in view of the problem it is conceived to answer (why does the model determine its result?). Those questions are named the interpretability of the model (how) and the explainability of the model (why).

Interpretability involves providing information that represents both the reasoning of the machine learning algorithm and the internal representation of the data in a format that can be interpreted by an ML or data expert. The result provided is strongly linked to the data used and requires knowledge of these but also of the model.

Explainability, on the other hand, consists in providing information in a complete semantic format that is self-sufficient and accessible to a user, whether new or technophile, and regardless of their expertise in Machine Learning; for example to the decision makers or the field engineers.

Those two questions are important to assess the reliability of the result of the model.

### Objective of the invention

The general objective of the invention is to assess, determine or evaluate the reliability of the output of a machine learning or deep learning model even if interpretability and explainability of the model cannot be achieved.

For example, one of the objectives of the present invention can be to detect an overfitting issue with a machine learned model. In other words, the invention aims at verifying whether the performance of a machine learning or deep learning model deviates with the introduction of different data than the ones used during training (Domain Shift).

Following the same histology example, the present invention aims at detecting whether the model is reliable and/or is too much dependent on the training data.

### Principles of the invention

One main feature of the present invention is to compare the output of a tested model with the output of a reference model.

So, first, a model is implemented, the reliability of which is to be determined (or at least the reliability of one output of the tested model), on a given dataset. This model can be called the tested model.

Then, another model, called reference model, is implemented on the same dataset, and then the outputs of the tested model with the output of the reference model are compared.

The reliability of the tested model is determined based on the similarity between the two outputs with the principle: the higher the similarity is, the higher the reliability of the tested model is.

Finally, a reliability model can be implemented based on this principle. This reliability model would determine the reliability of a tested model based on the similarity between the outputs of the tested model and the reference model.

Moreover, another main feature of the invention is to compare together a plurality of outputs of a plurality of models implemented on a same dataset (which are also comparable with each other's about both objectives of the models and format of the outputs). In this case, there is no reference model to be compared to: the idea is that the more consistent with one another the plurality of the outputs are, the lower the probability that all the models don't give reliable outputs is.

### Description of the method

The method is based on the previous principles.

### Computerized modules

The method is implemented by a computerized system. This system comprises various computerized modules which are each responsible for a step of the method.

A prediction model computerized module or prediction module is able or adapted to implement any machine learning model (for example machine learning models as described in the general overview).

This module is able or adapted to implement any models on a given dataset. This dataset is called the entry dataset as it represents the entry or entries of the model, whereas the prediction or prediction of the model, as explained in the general overview, is the output of the model.

The obtained output of the model can be a prediction vector of one of the following types:
- a simplex probability vector (multiclass),
- a one dimension probability vector, or
- a N-dimension probability vector.

A similarity computerized module is able or adapted to determine a similarity score between various (at least two) outputs of a prediction or prediction model and at least one machine learned model.

To determine the similarity score, the similarity module implements a similarity scoring method on the outputs.

That is to say that the entries of the similarity scoring method are outputs of machine learned models and the output of the similarity scoring method is similarity score.

The similarity scoring method can be one of the followings methods:
- cosine distance method, also called cosine similarity method,
- Kullback Leibler divergence method,
- equivalence of highest probability class method,
- dispersion of inferred Dirichlet method, or
- information radius method.

Cosine similarity is a measure of similarity between two non-zero vectors of an inner product space. It is defined to equal the cosine of the angle between them, which is also the same as the inner product of the same vectors normalized to both have length 1. From the latter definition, it follows that the cosine similarity depends only on the angle between the two non-zero vectors, but not on their magnitudes. The cosine similarity is bounded in the interval [-1,1] for any angle theta . For example, two vectors with the same orientation have a cosine similarity of 1, two vectors oriented at right angle relative to each other have a similarity of 0, and two vectors diametrically opposed have a similarity of -1. The cosine similarity is particularly used in positive space, where the outcome is neatly bounded in [0,1]. The name derives from the term "direction cosine": in this case, unit vectors are maximally "similar" if they're parallel and maximally "dissimilar" if they're orthogonal (perpendicular). This is analogous to the cosine, which is unity (maximum value) when the segments subtend a zero angle and zero (uncorrelated) when the segments are perpendicular.

These bounds apply for any number of dimensions, and the cosine similarity is most commonly used in high-dimensional positive spaces. For example, in information retrieval and text mining, each term is notionally assigned a different dimension and a document is characterised by a vector where the value in each dimension corresponds to the number of times the term appears in the document. Cosine similarity then gives a useful measure of how similar two documents are likely to be in terms of their subject matter.

The technique is also used to measure cohesion within clusters in the field of data mining.

One advantage of cosine similarity is its low-complexity, especially for sparse vectors: only the non-zero dimensions need to be considered.

Other names of cosine similarity are Orchini similarity and the Tucker coefficient of congruence; Otsuka-Ochiai similarity is cosine similarity applied to binary data.

In mathematical statistics, the Kullback-Leibler divergence, (also called relative entropy), is a statistical distance: a measure of how one probability distribution Q is different from a second, reference probability distribution P. A simple interpretation of the divergence of Q from P is the expected excess surprise from using Q as a model when the actual distribution is P. While it is a distance, it is not a metric, the most familiar type of distance: it is asymmetric in the two distributions (in contrast to variation of information), and does not satisfy the triangle inequality. Instead, in terms of information geometry, it is a divergence, a generalization of squared distance, and for certain classes of distributions (notably an exponential family), it satisfies a generalized Pythagorean theorem (which applies to squared distances).

The formation radius method, also calld Jensen-Shannon divergence, is a method derived from Kullback Leibler divergence that is symmetric and is based on the sum of Kullback Leibler divergence of all distribution and the average of all distribution.

The equivalence of highest probability class method outputs a proportion of prediction for the most predicted class. For example if predicted classes are [1, 3, 3, 2, 3], then the proportion of prediction is 3 / 5 = 0.6.

The dispersion of the Dirichlet method is a variance of a Dirichlet distribution representing the distribution of predictions. The Dirichlet distribution is a distribution of K-simplex (for example classification output of models are K-simplex, where the sum of the output probability of the K classes is 1, e.g. [0.1, 0.3, 0.6]).

For example, multiple models provide multiple K-simplex that can be fitted with a Dirichlet distribution with maximum likelihood method or Bayesian inference using a given prior.

A reliability computerized module is able to or adapted to implement a reliability model.

This reliability model is able or adapted to determine a reliability score based on a similarity score. Thus, the entry for the reliability model is a similarity score (for example determined by the similarity computerized module) and the output is a reliability assessment.

The reliability assessment can have different format:
- a reliability score between a lower and an upper limit,
- a binary prediction.

The reliability model can be a machine learned or deep-learned prediction model such as:
- multinomial logistic regression model,
- multinomial linear regressor model, or
- naive bayes model.

An aggregation computerized module is able or adapted to aggregate various outputs into one aggregated output.

The aggregation computerized module is able or adapted to aggregate the prediction outputs into an aggregated prediction output using, for example, a truth discovery method such as:
- majority voting,
- weighted voting,
- bayesian method, or
- information retrieval method.

A calibration computerized module is able or adapted to calibrate or train any machine learned model, at the population level and/or at the single image level, with a training dataset.

This training can be supervised, unsupervised or reinforced as described in the general overview.

Calibration can be done by population or by sample. Calibration by population consists of adjusting the overall performance according to the intensity of degradation, then predicting the performance from the similarity values of the predictions of the sub-models.

The calibration by sample is more precise, it consists from a sample, generating batches, and that is to say several copies of this sample with identical degradation intensities (the intensities are identical but the result is different because it is a random process).

Batches with different intensities are generated and then a calibration similar to the population method is performed. Several calibrations per sample of different intensity each are carried out.

A bootstrap computerized module is able or adapted to implement bootstrap and/or regularization method on any prediction model, for example a machine learned model.

Furthermore, a computer program, when run on a processor causes the processor to implement the modules of the computerized system to implement the method.

Reliability of one output of a machine learning model

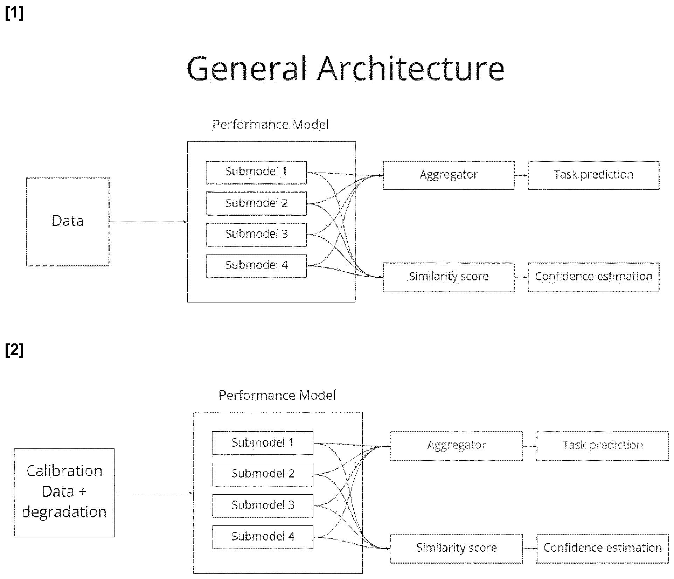

Now, as illustrated at figure 1, the objective of the method is to determine the reliability of the sub-model 1. This sub-model 1 can be called an individual model or the first model 1 or simply the model 1.

The sub-model 1 can be any machine learned model. It has been previously trained on a given training dataset.

First, the prediction model computerized module implements the sub-model 1 on a given dataset, different from the training dataset, to obtain a prediction output 10 according to the sub-model 1. It is of this output that reliability is to be determined.

The output 10 is typically a vector of one of the following type:
- a simplex probability vector (multiclass),
- a one dimension probability vector, or
- a N-dimension probability vector.

The given dataset is formed by measured data ie data measured or capture by acquisition system such as sensors or image capture systems.

Then, or in parallel, the prediction model module implements at least one other prediction model on the same given dataset. For example, as illustrated in figure 1, this at least one other model can be the sub-model 2.

This sub-model 2 is a prediction model adapted to determine a prediction or a prediction but not necessarily an artificial intelligence, a fortiori a machine learned model. For example, it can be a rule-based model or an expert system model.

It can be an artificial model and in particular a machine learned model. In this case, the sub-model 2 can have a different architecture than the sub-model 1, however it is designed to solve the same technical problem or answer the same question. In other words, the sub-model 2 have the same prediction or prediction goal and, as said before, is implemented on the same given dataset. That is why the output 10 can be compared to the output 20. In addition, the sub-model 2 has been trained on a training dataset which can be different of the training dataset of the sub-model 1 and which is different from the given dataset on which sub-models 1 and 2 are implemented on.

In another embodiment, the sub-model 2 have the same architecture than the sub-model 1 but has been trained on a different training dataset.

Thus, the prediction model module determines an output 20 by implementing the sub-model 2. Similarly, the output 20 is also a vector of one of the following types:
- a simplex probability vector (multiclass),
- a one dimension probability vector, or
- a N-dimension probability vector.

Preferably, the outputs 10 and 20 have the type of vector output.

At this point, the similarity module determines a similarity score between the output 10 and the output 20. The output 20 can be seen as a reference for the output 10 that reliability is to be determined.

Any similarity method can be used, as described above, to determine this similarity score.

Now, knowing the similarity score between the output 10 and the output 20, the question is: what is the reliability (or confidence) of the output 10 knowing the similarity score between the outputs 10 and 20?

The reliability module is conceived to answer this question. Based on the similarity score, the reliability module implements the reliability model which determines the reliability of the output 10. This reliability can be a reliability score between a lower and an upper limit. It can also be answer "yes" or "no" based on the reliability score (Boolean output). The reliability model will be described later.

This method can be implemented with a plurality of sub-models as references.

For example, there can be four sub-models as illustrated at figure 1. In this case, the prediction module further implements the sub-models 3 and 4 to obtain outputs 30 and 40.

Preferably, the sub-models 2, 3 and 4 have different architectures (can be different blocks or different size etc). As an example, one sub-model might use an end-to-end trained ResNet50; another sub-model might use self-supervised variational autoencoder with a multilayer perceptron on the top. The set of reference models is chosen to globally remove systematic errors introduced by each model architecture.

The similarity module determines the similarity score between the output 10 the reliability of which is to be assessed and the outputs 20, 30 and 40 according to any similarity scoring method as described above.

Then, the reliability module determines the reliability of the output 10 by implementing the reliability model on the similarity score between the output 10 and the outputs 20, 30 and 40.

### Reliability of a plurality of outputs of machine learned models

According to the present embodiment, we determine the reliability of a plurality of outputs of machine learned models. As stated before, all the machine learned models can have different model architectures but are designed to answer the same question or to solve the same technical problem.

For example, as illustrated in figure 1, the reliability of the sub-models 1 to 4 is to be determined.

In other words, compared to the previous embodiment, there is no reference sub-models the output of which is the reference to be compared to.

Apart from this, the method is similar. The prediction model module implements on a given dataset the plurality of machine learned models, for example four as illustrated in figure 1, to obtain a plurality of prediction or prediction outputs 10 to 40.

The outputs 10 to 40 can be aggregated in an aggregated output by the aggregation computerized module to have a single output that reliability is to be determined.

The plurality of outputs 10 to 40 can then be compared with each other by the similarity module according to similarity method as described above. This leads to a similarity score between the outputs 10 to 40.

Then, the reliability module implements the reliability model on the similarity score between the outputs 10 to 40 to determine to determine the reliability of these outputs.

This part of the method corresponds to the upper part of figure 1.

If the outputs 10 to 40 have been aggregated together, the reliability module determines the reliability of the aggregated output by implementing the reliability model on the similarity score.

Moreover, the plurality of sub-models, for example the four sub-models 1 to 4 as illustrated in figure 1, can be gathered in a general model, named performance model as depicted in figure 1, since the plurality of the sub-models are implemented on the same given dataset by the prediction model module.

In other words, the prediction model module implements the performance model on the given dataset, and determines as many outputs as there are sub-models gathered in the performance model.

In addition, this performance model can be combined with the aggregation module: thus, the aggregation module aggregates the outputs of the performance model into one aggregated output. This part of the method corresponds to the upper part of figure 1.

Indeed, generally it is more convenient to have only one output. As a reminder, preferably, the plurality of sub-models have different model architecture which all have their own biases; thus, the aggregation into one aggregated output allows to have only one output which takes into consideration all the sub-model architectures. Then, as described above, the reliability module can determine the reliability of the aggregated output (of the outputs) of the performance model.

### Reliability model

As described above, the reliability model is responsible of the link between the similarity score and the reliability assessment.

In one embodiment, the reliability model can be a model which is not a machine learned model. For example, it can be a rules-based model or an expert system model.

For example, a simple way to link the similarity score and the reliability assessment is to predetermine a reliability threshold for the similarity score: below the threshold, reliability is not assigned; above the threshold, reliability is assigned.

In another embodiment, the reliability model is a machine learned model and has to be trained to be able or adapted to link the similarity score and the reliability assessment.

The training of the reliability model has for objective to determine when the output(s) of the sub-model(s), if applicable gathered or not in the performance model, can be trusted, i.e. whether reliability can be assigned to it/them. Its objective is not to determine the performance or accuracy of the sub-model(s) or, if applicable, the performance model.

Indeed, as explained in more details in the general overview, the reliability machine learned model can be trained according to four main approaches:
- Supervised learning
- Unsupervised learning
- Reinforcement learning
- Semi-supervised learning,

The training of the reliability model is made with training datas which have not been used to train any of the plurality of sub-models, or individual models, gathered or not into a performance model. Thus, the training dataset or the training datasets of the reliability model is or are different from the one or those used to train the sub-model or the plurality of sub-models. To be better distinguished with the training datasets of the sub-models, the training dataset of the reliability model will be called the calibration dataset as illustrated at figure 2. The calibration dataset is different from the one or those used to train the sub-model or the plurality of sub-models.

On this calibration dataset, degradations can be applied such as Brownian noise, pixel deletions, blur etc. These degradations are intended on the one hand to increase the number of data, but also and above all to be able to voluntarily adjust the performance to fully calibrate the reliability model.

As the reliability model has for entry input a similarity score, the calibration dataset of the reliability model has to be made of similarity scores. To obtain them, the prediction module implements the plurality of sub-models, for example the four sub-models 1 to 4, on datas of the calibration dataset to obtain outputs of the plurality of sub-models. Then, the similarity computerized module determines a similarity score between the plurality of obtained outputs.

Those steps are repeated on other datas of the calibration dataset to obtain other similarity scores. Each of this similarity scores are labeled reliable or not since the datas from the calibration datas are known and the performance of the sub-model(s) on these datas is known.

As explained above, the degradations on the calibration dataset allows determining a wide scope of similarity scores to better train the reliability model. For example, the implementation of the sub-models on poor quality datas, with which the calibration module knows the reliability of the outputs cannot be assigned, lead to similarity scores which labeled as non-reliable similarity scores for the reliable model.

It is one of the advantages to use a reliability model which is a machine learned model. As explained in the general overview, the reliability model can be hard to interpret and even more to explain, but thanks to the supervised learning, it offers a confidence estimation or a reliability assessment of the output(s) of the sub-model(s).

Then, the calibration module calibrates the reliability model, at the population level and/or at the single image level, with the reliability model training dataset formed by all the similarity scores labeled.

Finally, the bootstrap module implements bootstrap and/or regularization method on the reliability model. That is to say that the calibration is repeated with several sub-samples of training datas of the calibrations dataset, and a verification to know whether the parameters of the reliability model are robust is made. If they are not, they can be set to their average value or set to 0.

### Advantages of the method

As explained in the general overview, a machine learned model can be hard to interpret and/or to explain. In this context, it is hard to know if the output of a model can be trusted.

Thanks to the method, a decision-maker is able to dodge those questions which are yet unsolved for a majority of machine learned models but still be able to assess the confidence into the result of the tested model.

Moreover, as seen in a specific embodiment, the method allows assessing reliability or confidence in the result of a model even if there is no reference model. This is very useful when the models have different architecture, since each architecture introduces its own specific biases or limits. Moreover, each sub-model can be difficult to understand (hard to interpret and/or to explain) which leads to a plurality of distinct outputs (or answers to the same question) even more difficult to understand.

If those outputs from different models (gathered into the performance model) are aggregated into one aggregated output, the method allows determining the level of trust, confidence or reliability into this aggregated output even if the obtaining of this aggregated output is hard to understand.

As the aggregated output can be seen as a unique result or response of the performance model (about a question or technical problem), the method is very useful for a decision-maker as it can base its decisions on the output if a good reliability is determined by the method.

In addition, the method allows a decision-maker to detect biases introduced during the training phase of a machine learned model. An example is the overfitting of a machine learned model. Thanks to the method, an overfitted model implemented on datas different from its training datasets will get a low similarity score with others models implemented of the same datas. The reliabililty module will alert of this.

### Application

From the most general point of view, the method can be used in all industries and applications where machine learned models are used to make predictions or decisions or prediction. In particular, this method can be used to control a system based on the assessment of the reliability of an output of the model or the reliability of the model. The control of the system can be direct or immediate, i.e. the trusted output is about a general characteristic of the system controlled (speed of delivering, quantity to be delivered, location to be positioned, speed of motion etc...) or it can be indirect if the trusted output is then computed by another computerized module which leads to the general characteristic of the system controlled.

However, machine learning and machine learned models can be used in others goals such as discovering unknown properties in the data on which the model is implemented: this field in named data mining. While machine learning focuses on prediction, based on known properties learned from the training data, data mining focuses on the discovery of (previously) unknown properties in the data (this is the analysis step of knowledge discovery in databases). The method can alert on false discovered properties (such as the overfitting as described above) and also allows comparing various machine learned models and assessing reliability in their discoveries.

Another field of application of the machine learned models is the optimization as many learning problems are formulated as minimization of some loss function on a training set of examples. Loss functions express the discrepancy between the predictions of the model being trained and the actual problem instances. The method allows assessing reliability of the result of the optimized technical parameter. Optimization of a technical parameter based on unknown datas from measurements (or measured datas) is a common application of machine learned models.

### Field medicine

A particular field application could be medicine.

In this field, one can wish to interpret measurements datas, with the understanding that the datas from the measurements can be analyzed or interpreted without requiring the presence of the subject on which the measurements were made. The performance of every method steps does not require the presence of the body of the subject.

As an example, medical imaging and histology are fields of application for the method.

Medical imaging establishes a database of normal anatomy and physiology to make it possible to identify abnormalities.

Histology is the branch of biology which studies the microscopic anatomy of biological tissues. Histology is the microscopic counterpart to gross anatomy, which looks at larger structures visible without a microscope.

In those fields, the measured datas on which the sub-models (and/or by extension the performance model) can be implemented are images captured by acquisition systems. It can be images of organ or tissues. In other words, they are the entry input of the sub-models (and/or by extension of the performance model).

Measurement and recording techniques that are not primarily designed to produce images, such as electroencephalography (EEG), magnetoencephalography (MEG), electrocardiography (ECG), and others, represent other technologies that produce data susceptible to representation as a parameter graph vs. time or maps that contain data about the measurement locations. These technologies can be considered forms of medical imaging and those representations or "images" can be the inputs datas or entry datas on which the sub-models (and/or by extension the performance model) are implemented on.

For example, a two-dimensional image comprises a set of pixels that span the plane of the image. Each pixel represents a square subset of the image plane. This square subset has a center of gravity. In a Cartesian coordinate system (x ;y), it is possible to locate the position of each square according to the coordinates (x ;y) of its center of gravity. The coordinates x and y represent the two degrees of freedom of the pixels of the image.

The position is therefore a first parameter of each pixel forming the image. There is also its intensity and the color of the layer of course even if it does not distinguish the pixels of a layer since it applies to the whole layer.

The intensity varies from 0 to 255 according to the RGB system. It can also be in gray level.

Therefore the inputs datas from the "images" of the representations of on which the sub-models (and/or by extension the performance model) can be implemented can therefore be the position (x;y), the intensity and the color of a layer from the "images".

Same applies mutatis mutandis for three-dimensional images.

Following the concrete example given in the general overview, the method can alert of the overfitting of the model.

As a reminder, in this concrete example, the images data (entries datas), on which a histology sub-model is implemented on, are digitized on a scanner X. One wishes to quantify a given marker whose coloring was carried out by an automaton Y. Once the training is carried out, although the sub-model has been trained with the scanner X and the automaton Y, it is possible that the dye has been changed and the amount of this dye spread on the slide would be different from the training phase. Thanks to the similarity score and the reliable model, the method implemented during the training phase of the histology sub-model alerts that the histology sub-model conceived suffers from overfitting. Here the overfitting would be on unknown parameters relating to the dye of the training phase.

Following the same example, if various histology sub-models - preferably with different architecture, preferably gathered in a general performance model - are implemented on a given dataset of images to be classified, the method allows assessing the reliability of the prediction outputs aggregated into one aggregated prediction output. The method allows determining if the aggregated prediction output can be trusted.

Then, if the aggregated prediction output is reliable according to the method, a decision-maker can make a decision based on it. For example, if the sub-models refers to the prediction of body tissues of a subject into disease state or not, the method allows the decision-maker to trust the aggregated output of the performance model or not and to decide whether or not there is a disease state based on the output.

In another example, the input data can be a patient's body temperature (e.g. 40.1°C) and the aggregated output of the performance model can be a suggestion for a flu diagnosis. For example, the output can be a probability to have the flu or a Boolean output "yes" or "no".

The four different sub-models forming the performance model are adapted to determine if the patient might have the flu if he has a temperature of 40.1 °C.

For example, each of these sub-models determined an output, potentially with not exactly the same data format, about the probability the patient has the flu and the similarity scoring module determines a similarity score between the outputs of the sub-models.

The method assesses the confidence in the aggregated output based on the similarity score.

### Particular example,

A particular use case in the medical field where the performance model aims at detecting cancer on digitalized patient tissue is described below.

This case is divided into two parts, the preparation of the model, then the use of the model.

### Training

In computing, a pipeline, also known as a data pipeline, is a set of data processing elements connected in series, where the output of one element is the input of the next one. The elements of a pipeline are often executed in parallel or in time-sliced fashion. Some amount of buffer storage is often inserted between elements.

Here, the full data pipeline transforms an image of a biological tissue to an indicator according to a set of data processing as defined above: "cancerous" or "non-cancerous". In other word, the prediction output of the data pipeline is an answer "cancerous" or "non-cancerous".

This output prediction is associated with a probability.

The architecture of the pipeline is composed of a core of two distinct deep learning models that each transforms the input image to a score of "cancerousness" between 0 and 1. In other words, here, the performance model is composed of two sub-models being two distinct deep learning models that transforms the input image to a score of "cancerousness" between 0 and 1

The first sub-model is a classical CNN, EfficientNetB7. The second sub-model is a combination of a Fourier transform layer that has its output connected to a Visual Transformer in a sequential manner.

To build and train all the sub-models of the pipeline, the data needed are a training dataset, a calibration dataset and a dataset for reglementary clinical validation.

These dataset comprise images of biological tissues.

The first sub-model model is trained on a random 90% of the training dataset, the second sub-model model is trained on another random 90% of the training dataset.

To aggregate the outputs of the two sub-models, a truth discovery method is applied; which is the absolute difference between both scores.

The similarity scoring method used measures the square of the difference between both scores.

The reliability model is a regression model which is a linear regression model, having a bias parameter b and a coefficient parameter c.

For the calibration of the performance model, a function that adds noise with intensity I to an image is used. For different intensities and different images, 1000 images are generated and then both the accuracy of the performance model and the corresponding similarity calculated are evaluated.

This accuracy and similarity evaluated are the data used to build the linear regression model, the similarity being the input and the accuracy the output. The output of the regression model is now called reliability. A typical example of b and c will be respectively 1 and -0.5.

After being trained, the performance model ends with an accuracy of 98%, meaning that 98% of the time it gives the right answer (based on the training data).

### Production use

At least 99% performance of the previous data pipeline is required for clinical reasons. In others word, the minimum reliability score is set such that 99% of the predictions of the trusted or reliable predictions made by the performance model are accurate predictions.

Here, it is simply a similarity score of 0.99 minimum.

If the similarity score determined by the comparison score is below, then the reliable model would not assign confidence in the prediction of the performance model.

A message is sent to the physician saying that the result is not reliable enough to be taken as it is.

### Other field

In other technical field, an application could be a braking control based on recognition of a pedestrian trajectory on a video from an onboard camera of a vehicle.

If this example, the input datas could the distance between the vehicle and the pedestrian previously measured by a measurement module based on the images capture by the onboard camera, the speed of the vehicle calculated with the measured speed of the engine and/or the localization of the vehicle measured by any position system (GPS for example), the position of the pedestrian on the road based on the images capture by the onboard camera.

A plurality of given state parameters of the situation can also be considered as entries or parameters of the sub-models such as parameters about the road (rugosity, inclination), the tires (wear) of the wheel, the weather (rainfall) at the localization at the exact moment of the implementation and/or few time ago etc.

Each of the sub-models is adapted to determine if the pedestrian will be hit by the vehicle. The outputs can be a probability of hit or a Boolean output "yes" or "no" for example.

The performance model determines an aggregated output based on the outputs of the sub-models. This aggregated output is therefore an answer to the question "will the pedestrian be hit by the vehicle?".

The method allows assessing the confidence in the answer, ie the output of the performance model.

For example, the method can be applied to a system aimed to detect close objects in order to avoid collision.

With this assessment, the method allows controlling the brakes of the vehicle: if the aggregated output classifies a hit, and this output is reliable according to method, the brakes of the vehicle will be activated to avoid the hit.

The system is composed of a camera associated to a deep learning model adapted to determine a distance, a RADAR and a LiDAR. Each of these subsystems returns an estimation of the distance to the closest object in all directions.

The deep learning model must be trained on distance data, while RADAR and LiDAR must be calibrated.

In this use case, the truth discovery method is the average of the three estimations and the similarity score is the coefficient of variation of the three estimations.

For the calibration, perturbation such as fog and metal dust are used in the same process.

Here, three sub-models predict a hit according to the distance determined by the camera associated to a deep learned model adapted to determine a distance, the RADAR and the LiDAR. The aggregated output is the average of the three estimations between 0 and 1.

The similarity score is the coefficient of variation of the three predictions between 0 and 1.

In another aspect of the invention, the method can be also implemented on the three systems adapted to determine a distance: the camera associated to a deep learned model adapted to determine a distance, the RADAR and the LiDAR. In this case, the computerized method determines the reliability of the prediction output of the deep-learned model.

The prediction model computerized module implements the deep learned model adapted to determine a distance to obtain a prediction distance output according to the model, and the others system adapted to determine a distance are also implemented. RADAR and LiDAR output a distance.

The three distances are aggregated according to the truth discovery method defined above.

Then, the similarity computerized module implements a similarity scoring method to determine a similarity score between :
- the prediction distance output of the model and
- the distance outputs of the RADAR and the LIDAR

The similarity score is the coefficient of variation of the three estimations.

Finally, the reliability computerized module implements a reliability model which determines the reliability of the prediction output of the at least one first prediction model based on the determined similarity score.

### References

- sub-model 1
- sub-model 2
- sub-model 3
- sub-model 4

## Claims

1. A computerized method for determining the reliability of a prediction output of at least one machine-learned or deep-learned first prediction model,
the method comprising:
- a prediction model computerized module implements
- the at least one first prediction model to obtain a prediction output according to the first prediction model, and
- at least one other prediction model to obtain a prediction output according to this other prediction model,
- a similarity computerized module implements a similarity scoring method to determine a similarity score between :
the prediction output of the at least one first prediction model and
the prediction output of the at least one other prediction model,
- a reliability computerized module implement an reliability model which determines the reliability of the prediction output of the at least one first prediction model based on the determined similarity score.

2. The method of claim 1 according to which the output of the at least one first prediction model and the at least one other prediction model is a prediction vector of one of the following type:
- a simplex probability vector,
- a one dimension vector, or
- a N-dimension vector.

3. The method of any of the preceding claims according to which the similarity scoring method is one of the followings methods:
- cosine distance method,
- Kullback Leibler divergence method,
- equivalence of highest probability class method,
- dispersion of inferred Dirichlet method, or
- information radius method.

4. The method according to any of the preceding claims determining the reliability of prediction outputs determined by:
- the at least one first prediction model and
- the at least one other prediction model, wherein the at least one other prediction model is a machine-learned or deep-learned individual prediction model,
the method comprising
- the reliability computerized module implements the reliability model which determines the reliability of the prediction outputs based on the determined similarity score.

5. The method of the preceding claim according to which the at least one first prediction model and the at least one other prediction model have a different model architecture.

6. The method of any of the preceding claims 4 or 5 wherein
- a aggregation computerized module aggregates the prediction outputs into an aggregated prediction output.

7. The method of the preceding claim according to which
the aggregation computerized module aggregates the prediction outputs into an aggregated prediction output using a truth discovery method such as:
- majority voting,
- weighted voting,
- bayesian method, or
- information retrieval method.

8. The method according to any of the preceding claims wherein the at least first prediction model and the at least one other prediction model are implemented on input datas from measurements or acquisitions made by one or more measurement or acquisition system.

9. A computerized training method of the reliability model,
wherein the reliability model is a machine learned or deep-learned prediction model,
the method comprising:
i - a prediction computerized module implements a plurality of prediction model on a training dataset to obtain prediction outputs,
ii - a similarity computerized module implements a similarity scoring method to determine a similarity score between the prediction outputs obtained,
iii - repetition of step i and ii, with a different training dataset at each repetition, to obtain a reliability model training dataset comprising the similarity scores determined,
each similarity score being labeled to be reliable or not,
iv - a calibration computerized module calibrates the reliability model, at the population level and/or at the single image level, with the reliability model training dataset, according to a supervised training.

10. The training method of the preceding claim wherein all the training datasets of step i are different from any dataset used to train the first prediction model of claim 1 and, if applicable, different from any dataset used to train any of the plurality of prediction models of claim 4.

11. The training method of any of the preceding claims 9 to 10 according to which
- the different training dataset of step iii is obtained by data destruction on the training dataset of step i such as noise, blur, and/or uncontrast.

12. The training method of any of the claims 9 to 11 further comprising:
- a bootstrap computerized module implements a bootstrap and/or a regularization method on the reliability model.

13. A computerized method for controlling a system implementing the method of any of the claims 1 to 12 and further comprising controlling a system based on said prediction output.

14. Computerized system for determining the reliability of a prediction output of at least one machine-learned or deep-learned first prediction model comprising:
- a prediction computerized module adapted to implement
- the at least one first prediction model to obtain a prediction output according to the first prediction model, and
- at least one other prediction model to obtain a prediction output according to this other prediction model,
- a similarity computerized module adapted to implement a similarity scoring method to determine a similarity score between :
the prediction output of the at least one first prediction model and
the prediction output of the at least one other prediction model,
- a reliability computerized module adapted to implement a reliability model which determines the reliability of the prediction output of the at least one first prediction model based on the determined similarity score.

15. A computer program for determining the reliability of a prediction output of at least one machine-learned or deep-learned first prediction model, wherein the computer program is adapted, when run on a processor, to cause the processor to implement the method of any of the claims 1 to 13.
